# EUROPEAN PATENT APPLICATION

(11) **EP 4 571 399 A1**
(43) Date of publication of application: **18.06.2025**
(21) Application number: 24216107.3
(22) Date of filing: 28.11.2024
(51) Int. Cl.: G02C 5/14, G02C 11/00

(54) **EYEWEAR APPARATUS AND METHOD FOR INTEGRATING POWER SOURCE WITH EYEWEAR APPARATUS**

(30) Priority: 12.12.2023 FI 20236366
(71) Applicant: Pixieray Oy, 02630 Espoo (FI)
(72) Inventor: Yliluoma, Timo, 00580 Helsinki (FI); Huittinen, Otto, 01680 Vantaa (FI)
(74) Representative: Moosedog Oy

(57) **Abstract**

Disclosed is eyewear apparatus (100, 202) comprising frame (102); optical element (104) supported by frame; first temple (106) having cavity (108,204); first hinge (110) rotatably coupling first temple with respect to frame, wherein first hinge is detachably coupled to first temple using adhesive (208), and wherein first temple is detachable from first hinge by heating adhesive therebetween; at least one electrical component (112) arranged on at least one of optical element or frame; power source (114,206) housed inside cavity of first temple, wherein power source is employed to supply electricity to at least one electrical component; supporting part (116) coupled to first hinge, wherein supporting part is configured to support power source thereon and configured to be slidably received inside cavity of first temple; and electrical conductor (118) fitted to supporting part and connecting power source to at least one electrical component.

## Description

### TECHNICAL FIELD

The present disclosure relates to eyewear apparatuses. Moreover, the present disclosure relates to methods for integrating power sources with eyewear apparatuses.

### BACKGROUND

In recent times, eyeglasses (namely, smart glasses) have gained popularity for their multifunctionality, incorporating features such as augmented reality displays, wireless connectivity, and various sensors therein. Traditionally, the eyeglasses have not included or utilized electrical components. Moreover, recent attempts to introduce such electrical components have faced obstacles, particularly in providing electrical connections for even small electrical components such as microphones. The integration of larger-scale electrical components into eyeglass frames is even more challenging due to the compact and lightweight nature of many frames of the eyeglasses. Furthermore, design considerations complicate the inclusion of the electrical components in the eyeglasses, as frames are often fashion-forward items where the design is a paramount.

Moreover, altering or changing the electrical components in traditional eyeglass frames has proven problematic. In this regard, once manufactured, embedded electrical components are typically permanent, and the addition of new components is impractical. Furthermore, attachment methods for the electrical components to the eyeglass frames have lacked reliability, design friendliness, and commercial success.

The conventional A-B cover type of assemblies in the eyeglasses add unnecessary bulk and rigidity to the eyeglasses, impacting both the comfort and appearance of the final product. Moreover, the primary hurdle lies in effectively incorporating the component within the confines of the eyewear while maintaining a balance between functionality, comfort, and aesthetics. Yet, integrating a power source into the eyeglasses presents a significant design challenge.

Therefore, in light of the foregoing discussion, there exists a need to overcome the aforementioned drawbacks.

### SUM MARY

The aim of the present disclosure is to provide an eyewear apparatus and a method to improve a level of integration of a power source into the eyewear apparatus. The aim of the present disclosure is achieved by an eyewear apparatus and a method for integrating a power source with an eyewear apparatus as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of an eyewear apparatus, in accordance with an embodiment of the present disclosure;
FIG. 2A is an illustration of a cross-sectional view of a first temple of an eyewear apparatus, in accordance with an embodiment of the present disclosure;
FIG. 2B is an illustration of an adhesive, in accordance with an embodiment of the present disclosure;
FIG. 3 is an illustration of a flowchart depicting steps of a method of an eyewear apparatus, in accordance with an embodiment of the present disclosure; and
FIG. 4 is a simplified illustration of an eyewear apparatus, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides an eyewear apparatus comprising:
- a frame;
- an optical element supported by the frame;
- a first temple having a cavity;
- a first hinge rotatably coupling the first temple with respect to the frame, wherein the first hinge is detachably coupled to the first temple using an adhesive, and wherein the first temple is detachable from the first hinge by heating the adhesive therebetween;
- at least one electrical component arranged on at least one of: the optical element or the frame;
- a power source housed inside the cavity of the first temple, wherein the power source is employed to supply electricity to the at least one electrical component;
- a supporting part coupled to the first hinge, wherein the supporting part is configured to support the power source thereon and configured to be slidably received inside the cavity of the first temple; and
- an electrical conductor fitted to the supporting part and connecting the power source to the at least one electrical component.

The first aspect of the present disclosure provides the eyewear apparatus that is user-friendly and possesses enhanced functionality and design. The cavity in the first temple ensures a streamlined integration of the power source, minimizing volume and addressing the typical bulkiness associated with conventional assemblies. The detachable coupling between the first hinge and the first temple, facilitated by the adhesive, allows for straightforward assembly and enables easy detachment for maintenance or recycling purposes. The supporting part coupled to the first hinge, designed for sliding into the cavity of the first temple, efficiently supports the power source, optimizing space usage and contributing to the overall sleek design of the eyewear apparatus. The electrical conductor fitted to the supporting part ensures reliable connectivity, offering an efficient and practical solution for supplying electricity to the at least one electrical component of the eyewear apparatus. By fitting the power source precisely within the cavity of the temple, the eyewear apparatus achieves a sleek, compact form factor that avoids external bulkiness, ensuring improved comfort and aesthetics. Such a design also enhances structural integrity and durability, as the power source is securely housed, reducing a risk of displacement or damage. Additionally, the supporting part being slidably received inside the cavity allows for quick and easy maintenance of the power source. A technical benefit of using the first hinge and the adhesive in the eyewear apparatus is enhanced flexibility and stability of a connection between the first temple and the frame. The hinge provides mechanical articulation, allowing the first temple to rotate smoothly while maintaining structural integrity. Meanwhile, the adhesive ensures a strong, stable bond that secures the first hinge to the first temple, preventing unwanted movement or detachment. Such a synergistic combination results in a durable and reliable connection that supports a dynamic movement of the first temple while maintaining alignment and stability. The adhesive helps distribute stresses evenly across a hinge joint, reducing a risk of failure and extending a lifespan of the eyewear apparatus. Additionally, the adhesive's ability to form a secure bond contributes to a clean, streamlined design by eliminating a need for bulky mechanical fasteners. Resultantly, due to these aforesaid reasons, a level of integration of the power source into the eyewear apparatus is significantly improved.

In a second aspect, the present disclosure provides a method for integrating a power source with an eyewear apparatus having a frame, an optical element supported by the frame, at least one electrical component arranged on at least one of: the optical element or the frame, a first temple and a first hinge rotatably coupling the first temple with respect to the frame, the method comprising:
- configuring a cavity in the first temple.
- coupling a supporting part with the first hinge, wherein the supporting part is configured to support the power source thereon and configured to be slidably received inside the cavity of the first temple;
- receiving the supporting part and the power source within the cavity; and
- detachably coupling the first temple and the first hinge using an adhesive for integrating the power source within the first temple, wherein the first temple is detachable from the first hinge by heating the adhesive therebetween,
wherein the power source is employed to supply electricity to the at least one electrical component.

The second aspect of the present disclosure provides the aforementioned method that introduces an efficient approach to integrate the power source into the eyewear apparatus. In this regard, the method optimizes space utilization and facilitates a streamlined integration process by configuring the cavity within the first temple and coupling the supporting part with the first hinge. The supporting part, designed to support the power source and be slidably received inside the cavity of the first temple, ensures an ergonomic and space-efficient arrangement. The detachable coupling of the first temple and the first hinge using the adhesive offers practical benefits for both assembly and subsequent maintenance, allowing for easy detachment by heating the adhesive. The detachable coupling proves advantageous for recycling or repairing the power source. Advantageously, the method integrates the aforementioned components of the eyewear apparatus to deliver a compact, user-friendly, and technologically advanced eyewear apparatus with efficient power integration and easy maintenance.

The term *"eyewear apparatus"* as used herein refers to an arrangement of electrical and/or mechanical components that is worn around eyes of a user of the eyewear apparatus (referred to as *"wearer"* throughout a remainder of the present disclosure). Optionally, the eyewear apparatus is employed, for example, to correct a vision disorder, including but not limited to, myopia, hyperopia, astigmatism, presbyopia and the like, such as, by enabling appropriate refraction, reflection, diffraction or transmission of light towards the eyes of the wearer wearing the eyewear apparatus. Optionally, the eyewear apparatus is used to provide protection to the eyes of the wearer from ambient conditions such as sunlight, ultraviolet radiation, blue light associated with computing devices, dust, chemical fumes and such like. Optionally, the eyewear apparatus enables display of information to the eyes of the wearer.

The term *"frame"* as used herein refers to a mechanical component of the eyewear apparatus that acts as a stable base to enable the wearer to wear the eyewear apparatus around the eyes. Optionally, the frame is fabricated, for example, with cellulose acetate, propionate plastic, nylon-based plastic, polyamide, epoxy resin, carbon fiber, metal, metal alloy and the like. In one example, the frame comprises a left rim corresponding to a left eye of the wearer and a right rim corresponding to the right eye of the wearer. Further, the left rim and the right rim are separated by a bridge that is arranged on nose of the wearer when the eyewear apparatus is worn by the wearer. In another example, the frame comprises a single rim having a width equal to or more than a binocular distance of the wearer.

The term *"optical element"* as used herein refers to a mechanical or electromechanical component that alters a property of light transmitted from outside the optical element towards the eyes of the wearer, such as direction, intensity, polarization, phase, or wavelength through, for example, reflection, refraction, diffraction, or transmission of the light through the optical element. Optionally, such an optical element can comprise a single optical element (such as a lens, mirror, grating, prism, light filter, beam splitter and fiber optic device) having a width more than or equal to the binocular distance of the wearer. In one example, the optical element comprises a left optical element, such as first a lens, arranged in travel path of light towards the left eye of the wearer and a right optical element, such as a second lens, arranged in travel path of light towards the right eye of the wearer. The optical element is supported by the frame, for example, by employing a permanent, skin-friendly adhesive to attach the optical element to the frame. Alternatively, the frame is fabricated to grip the optical element, such as, by fabricating the rim (or the left and right rims) of the frame around the optical element.

The term *"first temple"* and the *"second temple"* as used herein refers to an elongated mechanical or electromechanical component that is disposed towards at an extreme left end and/or an extreme right end of the frame. The first temple and the second temple are arranged over ears of the wearer when the eyewear apparatus is worn by the wearer. Optionally, the first temple is a left temple corresponding to a left side of the frame such that the left temple is received over left ear of the wearer. Optionally, the left temple enables the eyewear apparatus to be balanced over the left ear of the wearer. Optionally, the second temple is a right temple corresponding to a right side of the frame such that the right temple is received over right ear of the wearer. Optionally, the right temple enables the eyewear apparatus to be balanced over the right ear of the wearer. Further, arrangement of the first temple and the second temple on two opposite sides of the frame ensures a symmetrical and balanced design of the eyewear apparatus. Such symmetrical and balanced design provides consistent weight distribution, improving wearability and comfort for the wearer during use of the eyewear apparatus.

The term *"cavity"* as used herein refers to a hollow space, a hole, or a void within a solid object or within a body. The cavity is designed to accommodate various components or elements that contribute to the functionality and features of the eyewear apparatus. The cavity in the first temple is intricately connected to both the optical element and the frame, establishing a cohesive and integrated structure within the eyewear apparatus. Structurally, the cavity is part of the first temple, seamlessly integrated into a tubular design of the first temple.

The term *"first hinge"* as used herein refers to a pivotal mechanism that allows the first temple to rotate or pivot with respect to the frame of the eyewear apparatus. The first hinge enables the opening and closing of the first temple, allowing the wearer to put on or remove the eyewear apparatus easily and adjust the first temple for a comfortable fit on a face of the wearer. The first hinge enables the rotational coupling of the first temple to the frame of the eyewear apparatus.

It will be appreciated that the first hinge and the frame may be coupled together using, for example, such as a mechanical fastener (such as a screw). Alternatively, the first hinge and the frame could be coupled together using a snap-fit design or an integrally-molded design. Coupling the first hinge and the frame in any of the aforesaid manners offers several benefits, for example, the first hinge and the frame coupled using the mechanical fastener or the integrally-molded design would be robust and resistant to environmental factors such as heat, moisture, mechanical stress, and the like. Such a coupling may also ensure a precise alignment and a positioning of the frame and hinge with respect to each other, thereby providing an improved functionality. Moreover, typically, a mechanical or integral attachment allows for easier assembly and disassembly, facilitating maintenance, repairs, and part replacement without any need for specialised tools. This facilitates in improving an overall longevity, a robustness, a reliability, and a user-friendliness of the eyewear apparatus.

The term *"adhesive"* as used herein refers to a substance that is used to stick or bond two or more surfaces together. An example of the adhesive used for the detachable coupling between the first hinge and the first temple could be a thermoplastic adhesive. In such a case, the thermoplastic adhesives exhibit the property of becoming pliable or liquid when exposed to heat and resolidifying upon cooling. In another example, the adhesive could be a hot melt adhesive, which, when heated during the detachable coupling process, forms a strong bond between the first hinge and the first temple. This bond ensures stability during regular use of the eyewear apparatus. The adhesive is selected based on the ability thereof to withstand the mechanical stresses encountered during the use of the eyewear apparatus while remaining responsive to heat. When heat is applied, the adhesive undergoes a reversible change, losing its strength and allowing for the detachment of the first temple from the first hinge.

The technical effect of using the adhesive in the detachable coupling is to ensure a secure and stable connection during regular use, meeting the requirements of a reliable design of the eyewear apparatus. Beneficially, the reversible nature of the adhesive allows for easy detachment when heated, providing a practical solution for maintenance or repair scenarios of the eyewear apparatus. The thermal characteristics of the adhesive are engineered to soften or break down upon exposure to heat, facilitating the detachment of the first temple from the first hinge without causing harm to other components of the eyewear apparatus.

The detachable coupling mechanism significantly enhances the wearer convenience by simplifying the replacement or customization of the first temple without the need for specialized tools. It will be appreciated that a use of adhesive not only contributes to a secure attachment of the first temple and the first hinge, but also plays a critical role in an overall technical advantage of integrating the power source into the first temple of the eyewear apparatus. For example, the adhesive can be formulated in a manner that a connection between the first temple and the first hinge remains secure under regular-usage conditions until a precise and controlled separation force (upon heating) is applied to easily detach the first temple and the first hinge whenever necessary. Such a controlled detachment is particularly important for accessing the power source, for replacement or upgrading without risking damage to delicate electronics or structural integrity of the eyewear apparatus. The adhesive can serve as a vibration dampening medium, reducing a transmission of mechanical vibrations and shocks between the first hinge and the first temple. Such a dampening effect can protect the power source and other sensitive electronic components from mechanical stress, enhancing an overall durability and longevity of the eyewear apparatus. By using the adhesive for such a detachable coupling, an assembly process of integrating the power source into the eyewear apparatus may also become more straightforward, as the adhesive allows for a simpler attachment mechanism, which can reduce manufacturing complexity and costs. The use of adhesive may also allow for a compact and streamlined design, as it eliminates a need for bulky mechanical fasteners, ensuring a sleek and an ergonomic design without compromising the functionality or aesthetics of the eyewear. The adhesive can also provide a sealing function, protecting the cavity which is housing the power source from dust, moisture, and other environmental factors. Such a sealing capability enhances a reliability and a lifespan of the power source, for example, by preventing an exposure to such potentially damaging external elements.

Optionally, at least one of: the first temple and the first hinge are further coupled by a screw or a pin. In this regard, the inclusion of the screw or the pin offers adjustability to the eyewear apparatus. Optionally, the wearer (namely, users or manufacturers) can choose between different screw or pin sizes, allowing for customization based on design preferences, structural requirements, or ease of assembly. Moreover, the use of the screw or the pin facilitates disassembly when required. In cases of maintenance, repair, or customization, the eyewear apparatus can be easily taken apart and reassembled by removing or replacing the screw or the pin. Furthermore, depending on the design and materials chosen, the screw or the pin coupling can provide added stability to the connection between the first temple and the first hinge. This can be particularly beneficial in scenarios where additional reinforcement is required for durability and long-term use. Additionally, the use of the screw or the pin allows for variability in the materials selected for the first temple and the first hinge. For example, if the primary coupling is adhesive-based, introducing the screw or the pin connection allows for different materials in the first temple or the first hinge without compromising the overall integrity of the eyewear apparatus. It will be appreciated that when the first temple and the first hinge are further coupled by the screw or the pin, the technical benefit is an enhanced structural stability and robustness of the coupling. Such an additional coupling may ensure that an attachment between the first temple and the first hinge remains secure under various conditions, for example, repetitive opening and closing of the temple. This may also provide some mechanical security, reducing a likelihood of detachment due to wear or accidental impact on the eyewear apparatus. Furthermore, the use of the screw or the pin allows for easy disassembly and reassembly during maintenance or repairs, without compromising functionalities of the hinge or the temple, thereby ensuring a longevity and a reliability of the eyewear apparatus.

The term *"electrical component"* as used herein refers to an element within an electrical circuit that performs a specific function related to the manipulation or transmission of electrical signals. In this regard, the at least one electrical component plays a crucial role in powering and enabling various components in the eyewear apparatus. The at least one electrical component is arranged on either the optical element or the frame of the eyewear apparatus. The technical effect of incorporating such electrical components is the augmentation of the capabilities of the eyewear apparatus to offer features such as augmented reality displays, wireless connectivity, or other interactive functionalities. Optionally, the at least one electrical component is at least one of: a microphone, an image sensor, a speaker, a wireless connectivity sensor. The technical benefit of arranging the at least one electrical component in the aforesaid manner is that the at least one electrical component facilitates in enabling features like hands-free communication, immersive visual experiences, and/or seamless connectivity. This may allow for a convenient, on-the-go access to technology, whilst maintaining a discreet and compact form factor. This may also improve user experience without any need for additional, bulky devices for providing same functionalities.

The term *"power source"* as used herein refers to a component designed to generate and store electrical energy for subsequent use. The electrical energy is utilized to power and supply electricity to various electronic components integrated into the eyewear apparatus. Optionally, the power source comprises at least one battery. In this regard, the power source comprises one or more batteries. The at least one battery interacts with the at least one electrical component of the eyewear apparatus. By incorporating the at least one battery as the power source, the eyewear apparatus benefits from a reliable and portable energy supply, allowing for extended usage without the need for frequent recharging or external power sources. In addition to this, when the power source comprises the at least one battery, it also offers a technical advantage of modularity and scalability. In other words, a design of the eyewear apparatus can be adapted to include different types or sizes of batteries. Such a modular approach allows for an easy integration of batteries with varying capacities, which can be selected based on specific power requirements. A battery-based power source also support the scalability by enabling the eyewear apparatus to be designed for different power needs. For example, additional batteries or a powerful battery configurations can be used to support more advanced features or extended usage times. Such a flexibility allows the eyewear apparatus to be scaled up or down in terms of functionality and performance, accommodating various use cases and user preferences. Moreover, a use of the at least one battery also simplifies a replacement process (or a recharging process), enabling users to easily swap out depleted batteries, thereby extending an overall lifespan of the eyewear apparatus and enhancing its user-friendliness.

Optionally, the at least one battery is rechargeable or disposable, depending on the design and intended usage of the eyewear apparatus. It will be appreciated that the power source provides a sustained and reliable electrical supply to enable the proper functioning of the at least one electrical component, enhancing the capabilities of the eyewear apparatus beyond basic vision correction.

Advantageously, by integrating the power source within the first temple, the eyewear apparatus achieves a compact and streamlined design, minimizing the need for external power supply sources. Said arrangement enhances the overall efficiency and portability of the eyewear apparatus, making the eyewear apparatus suitable for various applications where space and convenience are of importance.

Optionally, a shape of the cavity is configured to conform to a shape of the power source for being received and housed within the cavity. In this regard, the cavity is shaped to conform to the shape of the power source. It will be appreciated that the conformation of the cavity ensures a snug fit for the power source. Moreover, by conforming to the shape of the power source, the eyewear apparatus minimizes any potential movement or displacement of the power source during use. The aligned shapes of the cavity and power source optimize the use of available space and also contribute to the aesthetic and functional integration of the power source into the eyewear apparatus. The aforementioned alignment of the cavity and the power source enhance the overall stability and functionality of the eyewear apparatus, thus providing a more comfortable and reliable wearer experience. It will be appreciated that the cavity that precisely matches with the shape of the power source may ensure a snug fit, which minimizes its movement and vibrations therein. Such a stable housing reduces a risk of mechanical stress on the power source, enhancing an overall durability and reliability of the eyewear apparatus. Moreover, conforming the shape of the cavity to the shape of the power source maximises a use of an available space within the first temple, thereby allowing for a compact design, reducing an overall bulkiness and contributing to a sleeker, more ergonomic form factor. A well-fitting cavity may also prevent the power source from shifting or rattling, which can reduce the risk of damage or short circuits. A proper housing may also help protect the power source from external impacts, environmental factors, and potential wear and tear. Furthermore, designing the cavity to match the shape of the power source also simplifies an assembly process, allowing for easier insertion and secure placement of the power source. When the cavity fits the power source closely can aid in better thermal management, as it can facilitate an efficient heat dissipation.

Optionally, the shape of the cavity is configured to be one of: a cylindrical, a cuboidal or a polygonal. In this regard, the shape of the cavity can be configured to be the cylindrical, the cuboidal, or the polygonal. The technical effect of this configuration is versatility in design, allowing adaptation to different power source shapes or preferences in aesthetics of the eyewear apparatus. Optionally, the cylindrical shape of the cavity allows efficient use of space. Optionally, the cuboidal shape allows simplicity and uniformity in a design of the eyewear apparatus. Optionally, the polygonal shape allows for a customized and unique design of the eyewear apparatus. The flexibility ensures that the eyewear apparatus can accommodate various power source shapes while maintaining an elegant and tailored appearance. It will be appreciated that different shapes of the cavity can be made, based on different shapes of the power source. A cylindrical cavity may be ideal for a round battery, ensuring a snug fit and efficient space usage. A cuboidal shape can accommodate a rectangular or a square power source, providing stability and an ease of placement. A polygonal shape may allow for a complex, flexible design options, enabling custom configurations of the power source to be fit inside the cavity.

The term *"supporting part"* as used herein refers to a mechanical component designed to provide reinforcement, stability, or a specific function within the eyewear apparatus. In this regard, the eyewear apparatus comprises the supporting part in such a manner that the supporting part is coupled to the first hinge. The supporting part is designed to provide the support for the power source arranged thereon. Moreover, the supporting part is configured to be slidably received inside the cavity of the first temple. The slidable configuration introduces flexibility in accessing and maintaining the power source. Beneficially, the slidable configuration allows for easy insertion or removal of the supporting part, simplifying tasks such as battery replacement or maintenance.

Optionally, the supporting part comprises one or more conduction plates for supporting the power source on the supporting part. The term *"conduction plates"* as used herein refers to flat or planar components within the supporting part that facilitate the transfer of electrical energy. In this regard, the one or more conduction plates are designed to conduct electricity and are integral to the structure of the supporting part. Beneficially, the one or more conduction plates are strategically positioned within the supporting part to facilitate the secure placement and stable support of the power source. Advantageously, by incorporating the one or more conduction plates into the supporting part, the eyewear apparatus ensures efficient power transmission and reliable operation of the power source. Optionally, the one or more conduction plates simplifies maintenance procedures. In case of the power source replacement or repairs, the one or more conduction plates facilitate the straightforward removal and reinstallation of the power source, enhancing the overall serviceability of the eyewear apparatus.

The term *"electrical conductor"* as used herein refers to a material or component that allows a flow of electrical current therethrough. The eyewear apparatus comprises the electrical conductor that is fitted to the supporting part, enabling the connection of the power source to the at least one electrical component. It will be appreciated that the supporting part, in conjunction with the electrical conductor, facilitates the efficient and reliable transfer of the electrical energy from the power source to the one or more electrical components.

Optionally, the one or more conduction plates connect with electrical terminals of the power source for supplying electricity to the at least one electrical component from the power source via the electrical conductor. The term *"electrical terminals"* as used herein refers to specific points or connectors on the power source designed to establish electrical connections. Beneficially, the electric terminals are served as interfaces for the one or more conduction plates to connect with the power source, facilitating the transfer of electricity from the power source to the one or more electrical components through the electrical conductor. The electrical terminals act as precision points of contact, ensuring a reliable and efficient transfer of the electrical energy from the power source to the one or more conduction plates. This enhances the overall electrical connectivity within the eyewear apparatus, promoting the seamless operation of various electronic components.

Optionally, the use of electrical terminals contributes to a modular and serviceable design. In case of the power source replacement or maintenance, the modular nature of the electrical connections simplifies the process. Optionally, the electrical terminals provide a standardized interface for the conduction plates, enabling straightforward disconnection and reconnection, thus facilitating ease of maintenance and repair.

Optionally, the supporting part is configured to be a planar structure having a first part connected to the first hinge and second part orthogonally integral with the first part, the second part is configured to support the one or more conduction plates for supporting the power source thereon. In this regard, the planar configuration of the supporting part serves a specific purpose in the design of the eyewear apparatus. Moreover, by having the planar structure with distinct connected parts, it provides a stable and organized platform for accommodating the one or more conduction plates and supporting the power source. The orthogonal integration of the second part allows for efficient use of space and structural stability, ensuring optimal functionality of the electronic components. The first part is directly connected to the first hinge. The second part, integral with the first part and extending orthogonally, serves as the dedicated area for supporting the one or more conduction plates. The technical effect is the eyewear apparatus with improved structural integrity and space utilization, aligning with the overarching goal of creating a sleek, functional, and seamlessly integrated eyewear apparatus. Optionally, the supporting part can be elongated. Optionally, the supporting part can serve as a flexible circuit board for connecting the at least one battery to the first hinge or connecting the at least one battery further to the electric component.

It will be appreciated that when the second part of the planar structure is orthogonally integral with the first part phrase it means that the second part is attached to or extends from the first part at a right angle (i.e., 90 degrees). In other words, the second part is perpendicular to the first part, forming an L-shape or similar configuration. It will also be appreciated that such a planar structure provides a stable and a robust design to the supporting part for supporting the power source securely. Such a stability minimises a movement of the power source and reduces its risk of damage. The planar structure may also allow for an efficient use of space within the first temple as it is ensured that the one or more conduction plates and the power source are neatly organized and supported. This may enhance a reliability of electrical connections and reduces potential issues with electrical connectivity. Moreover, a perpendicular connection between the first and the second parts can contribute to overall durability, as it creates a sturdy frame that can better withstand mechanical stresses and impacts.

Optionally, a thermal expansion coefficient of a material, composing the first temple and the first hinge, is higher than a thermal expansion coefficient of the adhesive. In this regard, the first temple and the first hinge are composed of the material with the higher thermal expansion coefficient compared to the adhesive. It will be appreciated that the higher thermal expansion coefficient of the material in the first temple and the first hinge allows for differential expansion and contraction between the adhesive and the first temple or the first hinge during temperature variations. The differential thermal expansion and contraction mitigates the risk of delamination or detachment of the adhesive, ensuring the structural integrity and longevity of the eyewear apparatus. Beneficially, the use of the material with the higher thermal expansion coefficient in the first temple and the first hinge offers improved reliability and durability, thereby enhancing the overall performance and functionality of the eyewear apparatus. It will be appreciated that as the first temple and the first hinge are exposed to heating, the material of the first temple and the first hinge having a higher thermal expansion coefficient would likely expand more than the adhesive. This expansion can help to slightly separate the first temple and the first hinge, allowing heat to penetrate more effectively to the adhesive. Beneficially, as the temperature continues to rise, the adhesive begins to soften and melt, facilitating the detachment of the first temple from the first hinge when needed.

Optionally, the first hinge comprises a first contact surface and the first temple comprises a second contact surface for receiving the adhesive therebetween. In this regard, the first hinge is equipped with the first contact surface, and correspondingly, the first temple has the second contact surface. In this regard, when applying the adhesive, the first contact surface and the second contact surface come into contact, creating a bond that securely attaches the first temple to the first hinge.

The adhesive facilitates the secure attachment of the first hinge and the first temple, ensuring a reliable connection between these elements. By utilizing the adhesive between the contact surfaces, the eyewear system achieves enhanced structural integrity and durability. The first contact surface and the second contact surface allows for improved performance and longevity of the eyewear system, thereby providing a more reliable and robust solution for the wearers.

Optionally, at least one of the first contact surface or the second contact surface comprises at least one of: grooves, protrusions, perforations configured thereon. In this regard, optionally, the first contact surface comprises at least one of: the grooves, the protrusions and the perforations. Optionally, the second contact surface comprises at least one of: the grooves, the protrusions and the perforations. It will be appreciated that the grooves, the protrusions or the perforations on the contact surfaces facilitates improved grip and stability when the eyewear apparatus is worn. Optionally, the grooves, the protrusions, or the perforations interact with the user's skin or other contacting surfaces, thereby enhancing the overall comfort and fit of the eyewear apparatus. Additionally, the incorporation of the grooves, the protrusions or the perforations allows for better ventilation and airflow, reducing the likelihood of fogging or discomfort caused by trapped moisture. This configuration provides an advantageous solution for enhancing the user experience and usability of the eyewear apparatus.

Optionally, at least one of the first contact surface or the second contact surface is applied with the adhesive to form a ring of the adhesive between the first temple and the first hinge. In this regard, at least one of the first contact surface or the second contact surface is applied with the adhesive, resulting in the formation of the ring of the adhesive between the first temple and the first hinge. The ring serves to securely attach the first temple to the first hinge, thereby facilitating the smooth movement and stability of the eyewear apparatus. It will be appreciated that the ring of the adhesive ensures that the adhesive is evenly distributed around the first contact surface and the second contact surface. Such a uniform application enhances a strength of the adhesive and reduces a risk of weak spots that could lead to detachment of the first hinge and the first temple. Moreover, a ring shape of the adhesive may enable in creating a continuous, robust bond that improves a mechanical stability of the connection between the first temple and the first hinge. This stability is crucial for withstanding the stresses of regular use and mechanical movements.

Optionally, the eyewear apparatus further comprises
- a second temple; and
- a second hinge coupling the frame and the second temple, the second hinge configured to allow rotation of the second temple with respect to the frame.

The term *"second hinge"* as used herein refers to another pivotal hinge mechanism that allows the second temple to rotate or pivot in relation to the frame of the eyewear apparatus. The second hinge enables the opening and closing of the second temple, allowing users to put on or remove the eyewear apparatus easily and adjust them for a comfortable fit on their face.

Optionally, the second temple comprises a supplementary cavity for housing a supplementary power source or supplementary electronic components therein. In this regard, the supplementary cavity is designed to accommodate the supplementary power source or the supplementary electronic components. Optionally, the second temple, by virtue of the supplementary cavity, enables the eyewear apparatus to conveniently house additional power sources or the electronic components, thereby enhancing its functionality and versatility. The second temple facilitates the integration of the supplementary features into the eyewear apparatus, allowing for expanded capabilities and improved user experience. It will be appreciated that having the supplementary cavity for housing the supplementary power source or the supplementary electronic components allows the eyewear apparatus to support enhanced functionality, such as an extended battery life or additional features like placements of sensors or communication modules. Such a design may also facilitate in easy upgrades or modifications of the eyewear apparatus, enabling users to incorporate new technology without needing a complete redesign of the eyewear apparatus. Additionally, housing the supplementary power source or the supplementary electronic components in the second temple helps in distributing weight more evenly across the eyewear apparatus, improving a comfort and a balance when the eyewear apparatus is in use.

The present disclosure also relates to the method for integrating a power source with an eyewear apparatus as described above. Various embodiments and variants disclosed above, with respect to the aforementioned eyewear apparatus, apply mutatis mutandis to the method for integrating the power source with the eyewear apparatus. Optionally, the method further comprises detaching the first temple and the first hinge, by heating the adhesive therebetween, for repairing the power source, wherein a thermal expansion coefficient of a material, composing the first temple and the first hinge, is higher than a thermal expansion coefficient of the adhesive.

### DETAILED DESCRIPTION OF THE DRAWINGS

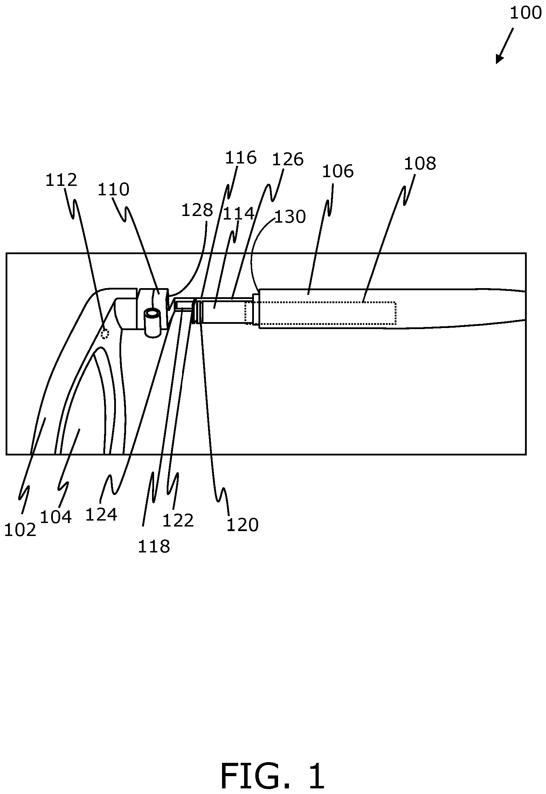

Referring to FIG. 1, illustrated is an eyewear apparatus **100,** in accordance with an embodiment of the present disclosure. The eyewear apparatus **100** comprises a frame **102.** The eyewear apparatus **100** comprises an optical element **104** supported by the frame **102.** The eyewear apparatus **100** comprises a first temple **106** having a cavity **108.** The eyewear apparatus **100** comprises a first hinge **110** rotatably coupling the first temple **106** with respect to the frame **102,** wherein the first hinge **110** is detachably coupled to the first temple **106** using an adhesive, and wherein the first temple **106** is detachable from the first hinge **110** by heating the adhesive therebetween. The eyewear apparatus **100** comprises at least one electrical component **112** arranged on at least one of: the optical element **104** or the frame **102.** The eyewear apparatus **100** comprises a power source **114** housed inside the cavity **108** of the first temple **106,** wherein the power source **114** is employed to supply electricity to the at least one electrical component **112.** The eyewear apparatus **100** comprises a supporting part **116,** coupled to the first hinge **110,** wherein the supporting part **116** is configured to support the power source **114** thereon and configured to be slidably received inside the cavity **108** of the first temple **106.** The eyewear apparatus **100** comprises an electrical conductor **118** fitted to the supporting part **116** and connecting the power source **114** to the at least one electrical component **112.**

As shown, optionally, the supporting part **116** comprises one or more conduction plates **120** for supporting the power source **114** on the supporting part **116.** Optionally, the one or more conduction plates **120** connect with electrical terminals **122** of the power source **114** for supplying electricity to the at least one electrical component **112** from the power source **114** via the electrical conductor **118.**

Optionally, the supporting part **116** is configured to be planar structure having a first part **124** connected to the first hinge **110** and second part **126** orthogonally integral with the first part **124,** the second part **126** is configured to support the one or more conduction plates **120** for supporting the power source **114** thereon.

Optionally, the first hinge **110** comprises a first contact surface **128** and the first temple **106** comprises a second contact surface **130** for receiving the adhesive therebetween.

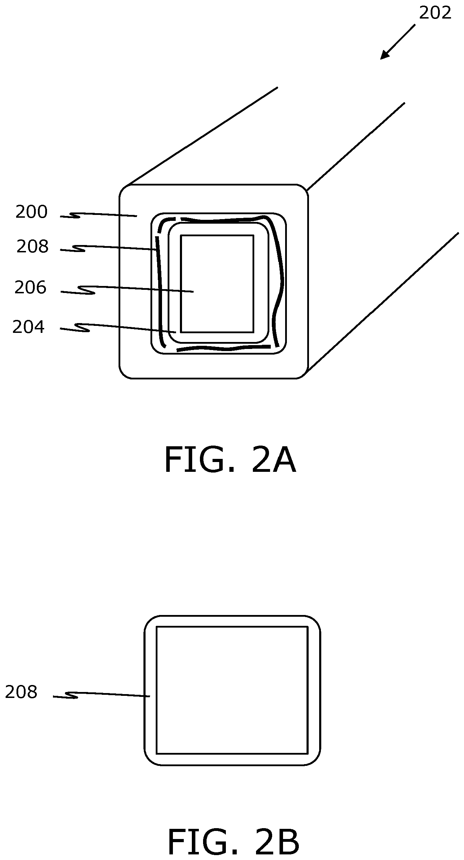

Referring to FIG. 2A, illustrated is a cross-sectional view of a first temple **200** of an eyewear apparatus **202,** in accordance with an embodiment of the present disclosure. The first temple **200** comprises a cavity **204** for housing a power source **206** therein. As shown, the shape of the cavity **204** is a cuboidal shape. Optionally, the shape of the cavity **204** is configured to conform to a shape of the power source **206** for being received and housed within the cavity **204.** Moreover, there is shown an adhesive (such as a glue) **208** being applied around the cavity **204.**

Referring to FIG. 2B, illustrated is the adhesive **208** in a form of a ring or a solid piece arranged on the first temple **200.** Optionally, the thermal expansion coefficient of a material, composing the first temple **200** and a first hinge, is higher than a thermal expansion coefficient of the adhesive **208.**

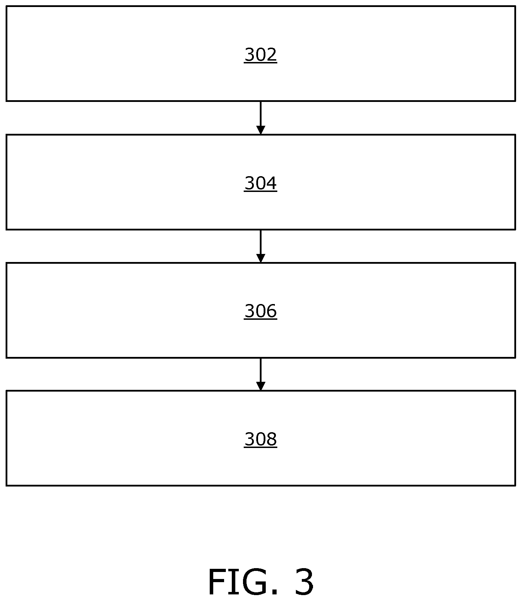

Referring to FIG. 3, illustrated is a flowchart depicting steps of a method of an eyewear apparatus, in accordance with an embodiment of the present disclosure. In this regard, the eyewear apparatus having a frame, an optical element supported by the frame, at least one electrical component arranged on at least one of the optical element or the frame, a first temple and a first hinge rotatably coupling the first temple with respect to the frame. At step **302,** a cavity is configured in the first temple. At step **304,** a supporting part is coupled with the first hinge, wherein the supporting part is configured to support the power source thereon and configured to be slidably received inside the cavity of the first temple. At step **306,** the supporting part and the power source are received within the cavity. At step **308,** the first temple and the first hinge are detachably coupled using an adhesive for integrating the power source within the first temple, wherein the first temple is detachable from the first hinge by heating the adhesive therebetween.

The aforementioned steps are only illustrative and other alternatives can also be provided where one or more steps are added, one or more steps are removed, or one or more steps are provided in a different sequence without departing from the scope of the claims herein.

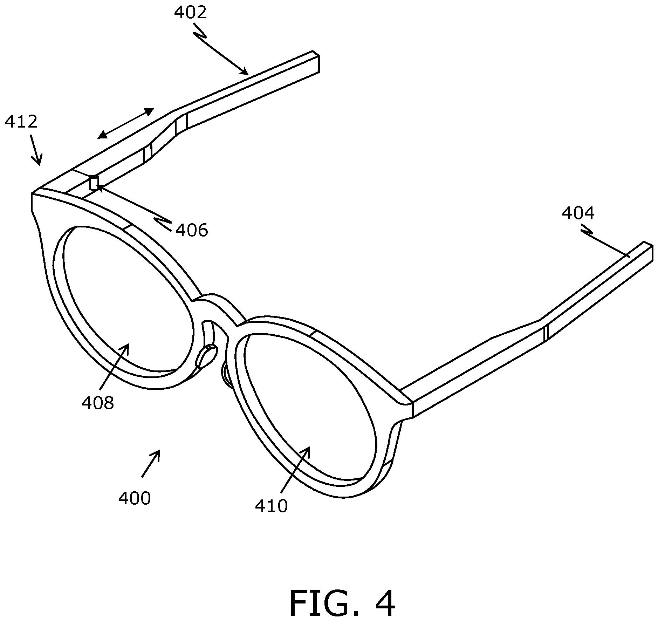

Referring to FIG. 4, illustrated is a simplified illustration of the eyewear apparatus **400,** in accordance with an embodiment of the present disclosure. The eyewear apparatus **400** comprises a frame **412.** The eyewear apparatus **400** also comprises a first optical element **408** and a second optical element **410,** which both are supported by the frame **412.** The eyewear apparatus **400** comprises a first temple **402** which is connected rotatably by a first hinge **406** to the frame **412,** and wherein the first temple **402** is detachable from the first hinge **406** by heating the adhesive therebetween. The eyewear also comprises a second temple **404,** which is located opposite to the first temple **412.** Because the figure is a simplified illustration of the eyewear, there is not presented a hinge to the second temple **404.**

## Claims

1. An eyewear apparatus (100, 202) comprising:
- a frame (102);
- an optical element (104) supported by the frame;
- a first temple (106) having a cavity (108,204);
- a first hinge (110) rotatably coupling the first temple with respect to the frame, wherein the first hinge is detachably coupled to the first temple using an adhesive, and wherein the first temple is detachable from the first hinge by heating the adhesive therebetween;
- at least one electrical component arranged on at least one of: the optical element or the frame;
- a power source (114,206) housed inside the cavity of the first temple, wherein the power source is employed to supply electricity to the at least one electrical component (112);
- a supporting part (116) coupled to the first hinge, wherein the supporting part is configured to support the power source thereon and configured to be slidably received inside the cavity of the first temple; and
- an electrical conductor (118) fitted to the supporting part and connecting the power source to the at least one electrical component.

2. An eyewear apparatus (100, 202) according to claim 1, wherein the supporting part (116) comprises one or more conduction plates (120) for supporting the power source (114,206) on the supporting part.

3. An eyewear apparatus (100, 202) according to claim 2, wherein the one or more conduction plates (120) connect with electrical terminals (122) of the power source (114,206) for supplying electricity to the at least one electrical component (112) from the power source via the electrical conductor (118).

4. An eyewear apparatus (100, 202) according to claim 2 or 3, wherein the supporting part (116) is configured to be planar structure having a first part (124) connected to the first hinge (110) and second part (126) orthogonally integral with the first part , the second part is configured to support the one or more conduction plates (120) for supporting the power source (114,206) thereon.

5. An eyewear apparatus (100, 202) according to any of the preceding claims, wherein the power source (114,206) comprises at least one battery.

6. An eyewear apparatus (100, 202) according to any of the preceding claims, wherein a shape of the cavity (108,204) is configured to conform to a shape of the power source (114,202) for being received and housed within the cavity.

7. An eyewear apparatus (100, 202) according to claim 6, wherein the shape of the cavity (108,204) is configured to be one of a cylindrical, a cuboidal or a polygonal.

8. An eyewear apparatus (100, 202) according to any of the preceding claims, wherein a thermal expansion coefficient of a material, composing the first temple (106) and the first hinge (110), is higher than a thermal expansion coefficient of the adhesive (208).

9. An eyewear apparatus (100, 202) according to any of the preceding claims, wherein the first hinge (110) comprises a first contact surface (128) and the first temple (106) comprises a second contact surface (130) for receiving the adhesive (208) therebetween.

10. An eyewear apparatus (100, 202) according to claim 9, wherein at least one of the first contact surface (128) or the second contact surface (130) comprises one of grooves, protrusions, perforations configured thereon.

11. An eyewear apparatus (100, 202) according to claim 9, wherein at least one of the first contact surface (128) or the second contact surface (130) is applied with the adhesive to form a ring of the adhesive (208) between the first temple (106) and the first hinge (110).

12. An eyewear apparatus (100, 202) according to any of the preceding claims, further comprising
- a second temple; and
- a second hinge coupling the frame (102) and the second temple, the second hinge configured to allow rotation of the second temple with respect to the frame.

13. An eyewear apparatus (100, 202) according to claim 12, wherein the second temple comprises a supplementary cavity for housing a supplementary power source or supplementary electronic components therein.

14. An eyewear apparatus (100, 202) according to any of previous claims, wherein at least the first temple (106) and first hinge (110) are further coupled by a screw or pin.

15. A method for integrating a power source (114,206) with an eyewear apparatus (100) having a frame (102), an optical element (104) supported by the frame, at least one electrical component arranged on at least one of the optical element or the frame, a first temple (106) and a first hinge (110) rotatably coupling the first temple with respect to the frame, the method comprising:
- configuring a cavity (108,204) in the first temple;
- coupling a supporting part (116) with the first hinge, wherein the supporting part is configured to support the power source thereon and configured to be slidably received inside the cavity of the first temple;
- receiving the supporting part and the power source within the cavity; and
- detachably coupling the first temple and the first hinge using an adhesive for integrating the power source within the first temple, wherein the first temple is detachable from the first hinge by heating the adhesive therebetween,
wherein the power source is employed to supply electricity to at least one electrical component (112).

16. A method according to claim 15, further comprising detaching the first temple (106) and the first hinge (110), by heating the adhesive (208) therebetween, for repairing the power source (114,206), wherein a thermal expansion coefficient of a material, composing the first temple and the first hinge, is higher than a thermal expansion coefficient of the adhesive.
